# EUROPEAN PATENT APPLICATION

(11) **EP 2 822 354 A1**
(43) Date of publication of application: **07.01.2015**
(21) Application number: 13755807.8
(22) Date of filing: 22.02.2013
(51) Int. Cl.: H04W 88/18, H04W 28/02

(54) **METHOD, SYSTEM, AND RECORDING MEDIUM FOR ANALYZING WIRELESS NETWORK LOAD REDUCTION POLICY**

(30) Priority: 01.03.2012 KR 20120021525
(71) Applicant: Ideaware Inc, Seongnam-si, Gyeonggi-do 463-847 (KR)
(72) Inventor: CHA, Yang Meong, Seongnam-si Gyeonggi-do 463-847 (KR)
(74) Representative: Gulde & Partner
(86) International application number: PCT/KR2013/001429
(87) International publication number: WO 2013/129804

(57) **Abstract**

The present invention relates to a method of operating a policy for reducing wireless network load, a system and a recording medium thereof. The system operating a policy for reducing wireless network load, according to the present invention, includes: an analysis server for receiving network usage information of analysis target applications included in a wireless terminal device through a detecting application that detects network usage information of one or more analysis target applications, the detecting application included in an user's wireless terminal device or an analytical wireless terminal device, storing the received network usage information in connection with information of the analysis target application in a storage medium, and obtaining network usage pattern information of the analysis target application by analyzing the network usage information of each analysis target application; and a policy server for generating network usage control policy information of the analysis target application by using the network usage pattern information of the analysis target application, and processing so that policy information for reducing network load is transmitted to an application for reducing network load included in the user's wireless terminal device, the policy information including the generated network usage control policy information and information of policy applicable target application. And, the analysis server compares amount of network usage after applying the network usage control policy information for the user's wireless terminal device with that before the applying, and then obtains a result of the comparing.

## Description

### BACKGROUND OF THE INVENTION

### 1. Technical Field

The present invention relates to processing network load reduction by, after analyzing network usage information of analysis target applications included in the wireless terminal device, obtaining network usage pattern information of the analysis target applications, generating network usage control policy information of each application corresponding to the network usage pattern information of each application, providing the generated information to the wireless terminal device, comparing amount of network usage after applying network usage control policy information for the user's wireless terminal device with that before the applying, and then obtaining a result of the comparing.

### 2. Description of the Related Art

After smart phones are introduced to the public, using patterns of terminal devices by individual users are rapidly moving from voice-call-oriented use to data-communication-oriented use.

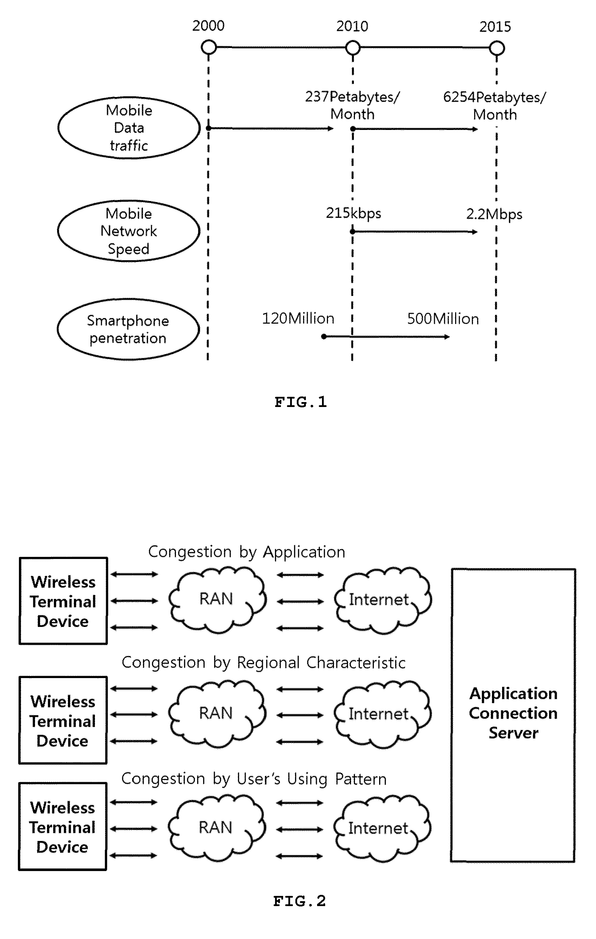

As mobile (wireless) data traffic indexes in FIG.1 show, mobile traffic is expected to continuously increase up to 26 times for the next 10 to 15 years. In the year 2010, an individual user daily used around 15MB of mobile data, which may reach 1GB in the year 2020.

Such increase in mobile traffic directly affects profitability and service quality of mobile carriers, forcing them to install additional equipment, consequently reducing their profits. Service dissatisfactions of mobile network users are also increasing, because of slowed speed of data communication.

Accordingly, in order to reduce investment burden and to ensure service quality, the mobile carriers are facing a challenge to make more efficient use of network infra, and need alternatives which provide predictability and real-time controllability, overcoming the limitations of conventional technology.

Meanwhile, as FIG. 2 shows, mobile network congestions are mainly caused by unnecessary use of network by the applications installed in wireless terminal devices, numerous wireless terminal devices concentrated in a limited space (e.g. stadium, subway, etc.), and using patterns of users.

In conclusion, in order to solve out both the mobile carriers' enormous waste of cost and the individual users' service dissatisfaction, alternatives capable of controlling the network using patterns have become absolutely needed. But unfortunately, solutions for these problems have not been introduced so far.

The above-mentioned problems in conventional technology and the awareness on the challenge are not obviously known for the persons who skilled in the art of the present invention. Therefore, the present invention shall not be deemed to be obvious based on this awareness.

### SUMMARY OF THE INVENTION

An object of the present invention for solving the above-mentioned problems is providing a method, a system and a recording medium for receiving network usage information of an analysis target application included in a wireless terminal device by using a detection application included in the wireless terminal device, the detection application detecting the network usage information of the one or more analysis target applications, after accumulatively storing the received network usage information in connection with the analysis target application information in a storage medium, obtaining network usage pattern information of the analysis target application by analyzing the network usage information of each analysis target application accumulatively stored in the storage medium, generating network usage control policy information of the analysis target application (that is, a policy applicable target application) by using the obtained network usage pattern information, processing so that policy information for reducing network load is transmitted to an application for reducing network load included in the wireless terminal device, the policy information comprising the generated network usage control policy information of the policy applicable target application and information of the policy applicable target application, comparing amount of network usage after applying network usage control policy information for the user's wireless terminal device with that before the applying, and then obtaining a result of the comparing. And, the present invention eventually enables an optimized usage method control based on a policy at the wireless terminal device side using the obtained network usage pattern information. With this, the mobile carriers may be able to reduce the installation cost of additional equipment and improve the service quality. At the same time, the user's data communication environment may be also improved by resolving the network congestions, with reduced consumption of batteries. In addition, the application developers and mobile carriers may operate reasonable discussion channels for each other.

Technical tasks to achieve in the present invention are not limited to the above-mentioned technical tasks. Other technical tasks which are not mentioned may be clearly understandable for those who skilled in the art of the present invention from the following description.

The system of analyzing a policy for reducing network load according to the present invention, comprises an analysis server for receiving network usage information of analysis target applications included in a wireless terminal device through a detecting application that detects network usage information of one or more analysis target applications, the detecting application included in an user's wireless terminal device or an analytical wireless terminal device, storing the received network usage information in connection with information of the analysis target application in a storage medium, and obtaining network usage pattern information of the analysis target application by analyzing the network usage information of each analysis target application; and a policy server for generating network usage control policy information of the analysis target application by using the network usage pattern information of the analysis target application, and processing so that policy information for reducing network load is transmitted to an application for reducing network load included in the user's wireless terminal device, the policy information including the generated network usage control policy information and information of policy applicable target application. And, the analysis server compares amount of network usage after applying network usage control policy information for the user's wireless terminal device with that before the applying, and then obtains a result of the comparing.

The method of analyzing a policy for reducing network load according to the present invention, comprises receiving network usage information of analysis target applications included in a wireless terminal device through a detecting application that detects network usage information of one or more analysis target applications, the detecting application included in an user's wireless terminal device or an analytical wireless terminal device; storing the received network usage information in connection with information of the analysis target application in a storage medium; obtaining network usage pattern information of the analysis target application by analyzing the network usage information of each analysis target application; generating network usage control policy information of the analysis target application by using the network usage pattern information of the analysis target application; processing so that policy information for reducing network load is transmitted to an application for reducing network load included in the user's wireless terminal device, the policy information including the generated network usage control policy information and information of policy applicable target application; comparing amount of network usage after applying network usage control policy information for the user's wireless terminal device with that before the applying; and transmitting a result of the comparing to a server over a communication network or storing the result of comparing in a storage medium.

According to an aspect of the present invention, by obtaining the network usage pattern information of each application included in the wireless terminal device, operating the network usage control policy information corresponding to the network usage pattern information of each application, and obtaining a result of comparing amount of network usage after applying network usage control policy information for the user's wireless terminal device with that before the applying, it may be possible to block or adjust unnecessary executions of applications which may cause network load by the policy. With this, it may also be possible to use the network optimally at the wireless terminal device side.

According to another aspect of the present invention, by optimizing network usage, the mobile carriers may be able to minimalize the installation cost of additional equipment.

According to another aspect of the present invention, by optimizing network usage, it may be possible to minimalize wireless terminal device user's dissatisfaction caused by data communication delay, etc. Additionally, battery consumption of the wireless terminal device may be reduced dramatically.

According to another aspect of the present invention, through network usage pattern information for each of the applications, application developers and mobile carriers may discuss easily in order to reduce network load.

### BRIEF DESCRIPTION OF THE DRAWINGS

FIG. 1 shows a view illustrating a mobile (wireless) data traffic indexes.
FIG. 2 shows a view illustrating main factors causing network congestions of the conventional technology.
FIG. 3 shows a view illustrating communication network connection according to an embodiment of the present invention.
FIG. 4 shows a view illustrating detailed structure of an analysis server according to an embodiment of the present invention.
FIG. 5 shows a view illustrating examples of obtaining pattern information for each application of the wireless terminal device by the analysis server according to an embodiment of the present invention.
FIG. 6 shows a view illustrating examples of the pattern information for each application of the wireless terminal device by the analysis server according to an embodiment of the present invention.
FIG. 7 shows a flow chart illustrating a process of obtaining the pattern information by the analysis server according to an embodiment of the present invention.
FIG. 8 shows a view illustrating detailed structure of an policy server according to an embodiment of the present invention.
FIG. 9 shows a view illustrating examples of operating policy information by the policy server according to an embodiment of the present invention.
FIG. 10 shows a view illustrating an effect of controlling network usage through the policy information according to an embodiment of the present invention.
FIG. 11 shows a flow chart illustrating a process of operating a policy by the policy server according to an embodiment of the present invention.
FIG. 12 shows a view illustrating detailed structure of a wireless terminal device according to an embodiment of the present invention.
FIG. 13 shows a view illustrating examples of applying policy information for each application according to an embodiment of the present invention.
FIG. 14 shows a flow chart illustrating a process of applying policy information for a wireless terminal device according to an embodiment of the present invention.
FIG. 15 shows a flow chart illustrating a process of analyzing amount of network usage by applying the policy information according to an embodiment of the present invention.

### DESCRIPTION OF THE PREFERRED EMBODIMENTS

Hereinafter, referring to enclosed figures and descriptions, operation principles of preferred embodiments of the present invention will be described. However, figures illustrated and descriptions mentioned in the below are only for the preferred embodiments among various method of describing features of the present invention. Therefore, the present invention is not limited to the figures illustrated and descriptions mentioned in the below. Additionally, in case of determining that a detailed description about known function or structure relating to the present invention may evade the main point of the present invention, the detailed description may be omitted. Also, terms to be mentioned in the following are defined in consideration of functions in the present invention, which may be vary according to the intention of a user or an operator, practical customs, etc. Therefore, the definition of the terms shall be made based on the overall contents of the present invention.

In conclusion, the technical spirit of the present invention shall be decided by claims. The following embodiments are merely a means for describing progressive spirit of the present invention to persons who skilled in the art of the present invention.

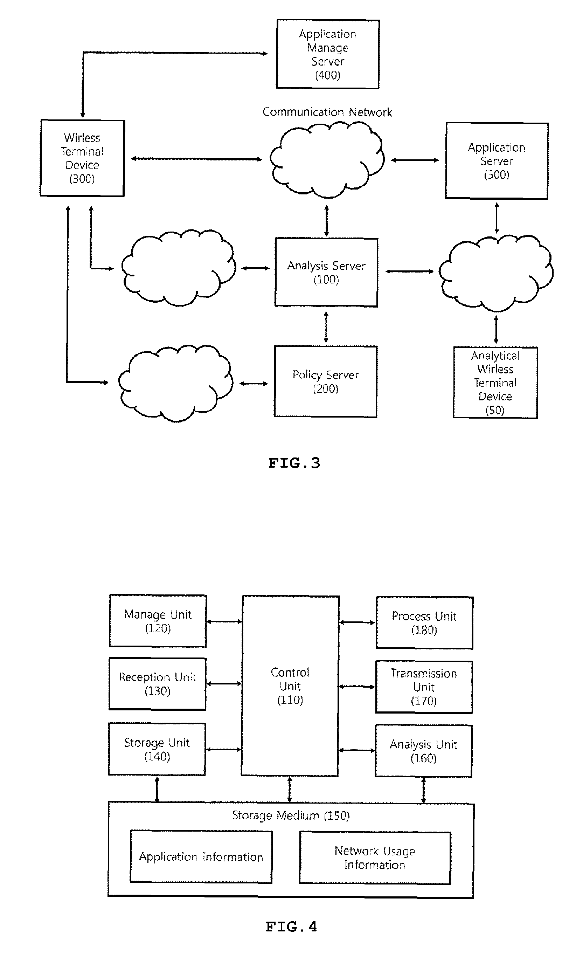

FIG. 3 shows a view illustrating a communication network or network connection according to an embodiment of the present invention.

More particularly, FIG. 3 is illustrating a structure of a system including an analysis server 100, a policy server 200, an analytical wireless terminal server 50 and/or a user's wireless terminal device 300, an application server 500 that are connected to each other over communication network. The analysis server 100 receives network usage information of an analysis target application by using a detection application included in the analytical wireless terminal server 50 and/or a user's wireless terminal device 300, after accumulatively storing the received network usage information in connection with the analysis target application information in a storage medium 150, obtains network usage pattern information of the analysis target application by analyzing the network usage information of each analysis target application accumulatively stored in the storage medium 150. And, the policy server 200 generates network usage control policy information of the analysis target application (that is, this means the policy applicable target application, and "the analysis target application" and "the policy applicable target application" may be same type applications that can be used mixed with each other), and processes to transmit the network usage control policy information to an application for reducing network load, the application included in the user's wireless terminal device 300. And, the analysis server 100 compares amount of network usage after applying network usage control policy information for the user's wireless terminal device 300 with that before the applying, and then obtains a result of the comparing.

The system of analyzing a policy for reducing wireless network load according to an embodiment of the present invention may configure various structures according to the implementation methods and the network connection methods over the communication network.

The analysis sever 100, a core component of the system of operating a policy for reducing network load according to the present invention, performs a role of obtaining the network usage pattern information of the analysis target application included in the analytical wireless terminal server 50 and/or a user's wireless terminal device 300. And, the analysis sever 100 performs a role of transmitting the obtained network usage pattern information of the analysis target application to the policy server 200 over the communication network so that the policy server 200 generates the network usage control policy information of each application for reducing network load by using the network usage pattern information of each application. And, the analysis server 100 performs a role of comparing amount of network usage after applying network usage control policy information for the user's wireless terminal device 300 with that before the applying, and then obtaining a result of the comparing. Also, the analysis server 100 further performs a role of comparing amount of network usage after applying network usage control policy information for the application server 500 accessed by the analysis target application included in the user's wireless terminal device 300 with that before the applying, and then obtaining a result of the comparing.

The policy sever 200, another core component of the system of operating a policy for reducing network load according to the present invention, performs a role of generating the network usage control policy information of the policy applicable target application by using the network usage pattern information of each application. And, the policy sever 200 performs a role of processing so that the policy information for reducing network load is transmitted to the application for reducing network load included in the user's wireless terminal device 300, the policy information comprising the generated network usage control policy information of the policy applicable target application and information of the policy applicable target application.

According to the present invention, though the analysis server 100 and the policy server 200 are shown as separate components, the analysis server 100 and the policy server 200 may be a single server, or one of the two servers may be included in the other server according to an implementation method. And, the policy server's role of generating the network usage control policy information of the policy applicable target application by using the network usage pattern information of each application may be performed by the analysis server 100, instead of the policy server 200.

The analytical wireless terminal server 50 and/or a user's wireless terminal device 300 according to the present invention perform a role of installing a detecting application provided by the analysis server 100, and then transmitting the network usage information of one or more analysis target applications included in the wireless terminal device to the analysis server 100 the using detection application.

Also, the user's wireless terminal device 300 according to the present invention may receive policy information - the policy information including at least one of policy applicable target application information and network usage control policy information for each of the policy applicable target applications - for reducing network load from the policy server 200, and store the policy information into a storage section 340. The user's wireless terminal device 300 then may check the policy applicable target application information included in the policy information stored in the storage section 340, and in a result of the checking, in case the policy applicable target application exists in the wireless terminal device 300, may perform a role of controlling network usage environment for the application by applying the network usage control policy information pre-stored in the storage section 340 for the application to the application.

According to the present invention, the analytical wireless terminal server 50 and/or a user's wireless terminal device 300 may include all kinds of terminal devices which enable data communication through network, such as smart phones, mobile phones, tablet PCs, telematics, etc.

An application manage server 400 according to the present invention performs a role of managing the application for reducing network load included in the user's wireless terminal device 300. The application for reducing network load receives the policy information - the policy information including at least one of policy applicable target application information and network usage control policy information for each of the policy applicable target applications - for reducing network load from the policy server 200, and store the policy information into a storage section 340. The application manage server 400 then may check the policy applicable target application information included in the policy information stored in the storage section 340, and in a result of the checking, in case the policy applicable target application exists in the wireless terminal device, may perform a role of controlling network usage environment for the application by applying the network usage control policy information pre-stored in the storage section 340 for the application to the application.

The application manage server 400 processes a role so that the application for reducing network load is installed in the user's wireless terminal device 300 and upgrading the application for reducing network load installed in the user's wireless terminal device 300, through a server such as App store over the communication network or directly.

The application server 500 according to the present invention performs a role of operating and managing each of the applications included in the user's wireless terminal device 300.

FIG. 4 shows a view illustrating detailed structure of the analysis server 100 according to an embodiment of the present invention.

More particularly, FIG. 4 shows a detailed structure of the analysis server 100 in the system of analyzing a policy for reducing wireless network load as shown in FIG. 3. Each component of the structure is merely for describing embodiments of the present invention. The technical feature of the present invention is not limited to the embodiments shown in FIG. 4.

Referring to FIG. 4, the analysis server 100 according to the present invention may include a manage unit 120, a reception unit 130, a storage unit 140, a storage medium 150, an analysis unit 160, a transmission unit 170, process unit 180, and a control unit 110 which may control each of the components described above.

Here, though the analysis server 100 is shown as a single server in the drawing for a description of an example, may be composed of one or more separated servers for the each mean or component.

Referring to FIG. 4, the manage unit 120 manages the detecting application installed in the analytical wireless terminal server 50 and/or a user's wireless terminal device 300.

According to the present invention, the manage unit 120 may process installing the detecting application in the analytical wireless terminal server 50 and/or a user's wireless terminal device 300 via an application distribution sever such as the Appstore, the detecting application detecting network usage of one or more analysis target applications included in the analytical wireless terminal server 50 and/or a user's wireless terminal device 300, and furthermore upgrading a policy for detecting and reception of the network usage information by the detection application.

The reception unit 130 according to the present invention receives the network usage information of the analysis target application included in the analytical wireless terminal server 50 and/or the user's wireless terminal device 300 using the detecting application managed by the manage unit 120.

Also, the reception unit 130 according to the present invention further performs a role of receiving, together with the network usage information of the analysis target application included in the analytical wireless terminal server 50 and/or the user's wireless terminal device 300, information of the network usage amount in the user's wireless terminal device 300 and the application server 500 from the user's wireless terminal device 300 and the application server 500 or from a server of mobile carriers over the communication network, using the detecting application.

The storage unit 140 accumulatively stores the network usage information received by the reception unit 130 in the storage medium 150, in connection with information of the analysis target application. And, the storage unit 140 stores the information of the network usage amount in the user's wireless terminal device 300 and the application server 500 in the storage medium 150.

Also, the storage unit 140 further stores the result of comparing of the network usage amount information before with after applying network usage control policy information for the user's wireless terminal device 300 and the application server 500 in the storage medium 150, the result of comparing being obtained by an analysis unit 160.

According to the present invention, if the reception unit 130 receives the network usage information of the analysis target application, the storage unit 140 checks the analysis target application in response to the received network usage information, and accumulates the network usage information pre-stored in the storage medium 150 in response to the checked analysis target application.

The storage medium 150 according to the present invention performs a role of accumulatively storing information of one or more analysis target applications and the corresponding network usage information, the information stored by the storage unit 140. And, the storage medium 150 stores the network usage amount information before and after applying network usage control policy information in the user's wireless terminal device 300 and the application server 500 and the result of comparing the network usage amount information before with after applying network usage control policy information for the user's wireless terminal device 300 and the application server 500.

According to the present invention, the storage medium 150 may be included in the analysis server 100 or a separate server over the communication network.

Also, the storage medium 150 further stores the network usage control policy information of each analysis target application that the analysis server 100 directly generates using the network usage information of each analysis target application.

The analysis unit 160 according to the present invention performs a role of obtaining network usage pattern information of each analysis target application by analyzing the network usage information of each analysis target application that is accumulatively stored in the storage medium 150.

According to the present invention, the network usage pattern information obtained by the analysis unit 160 may include at least one of:
information on number of connections to a certain IP or Port or URL per hour by the analysis target application,
information on number of pollings requesting data to a certain IP or Port or URL by the analysis target application,
information on number of pushes transmitting data to a certain IP or Port or URL or ID by the analysis target application,
information on size or capacity of data transmitted to a certain IP or Port or URL or ID by the analysis target application,
information on request and reception of user unauthorized target data including commercial data by the analysis target application,
in case a limit allocated to the wireless terminal device is exceeded by the analysis target application, information on connection of data communication, and
in case a communication network overload is set in a region where the wireless terminal device is located, information on connection of data communication by the analysis target application.

Also, the analysis unit according to the present invention compares the network usage amount information after applying network usage control policy information for the user's wireless terminal device 300 with that before the applying, the network usage amount information being stored in the storage medium 150, and then obtains a result of the comparing. And, the analysis unit according to the present invention compares the network usage amount information after applying network usage control policy information for the application server accessed by the analysis target application included in the user's wireless terminal device 300 with that before the applying, the network usage amount information being stored in the storage medium 150, and then obtains a result of the comparing.

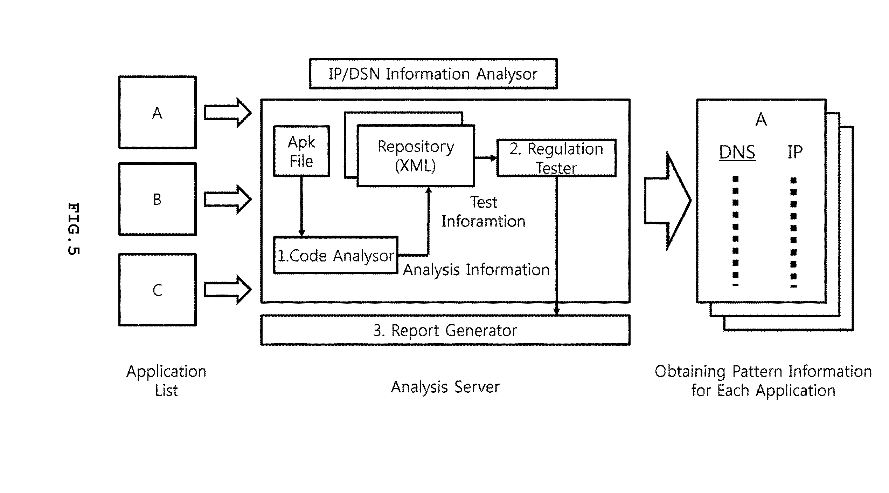

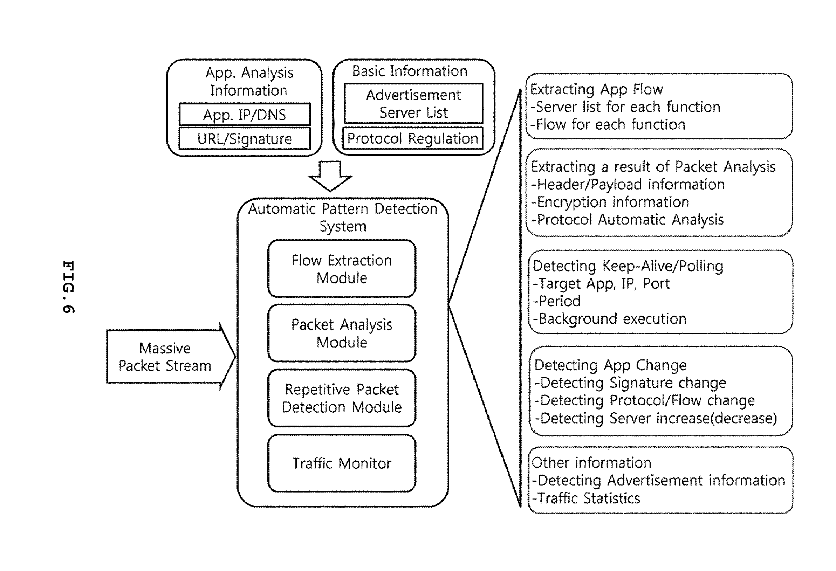

FIG. 5 and FIG. 6 show a schematic diagram and examples of obtaining the network usage pattern information for each analysis target application by the analysis server 100.

According to the present invention, as shown in FIG. 5, the analysis unit 160 pattern information of each application by analyzing a unique code of each application, the unique code being analysis target application information stored in the storage medium 150, and network usage regulation of each application.

According to an embodiment of the present invention, the analysis unit 160, by using at least one of the flow extraction module, the packet analysis module, the repetitive packet detection module and the traffic monitor, etc., extracts a list of access servers and flow for each function of the analysis target application, extracts packet header/Payload information/encryption information, automatically analyzes a protocol, obtains information of the period of Keep-Alive or data polling, run in background or not, access server IP and Port for each analysis target application, detects the application's changed state -Signature, the protocol and increase/decrease of a server, etc.- , and obtains the network usage pattern information of each analysis target application by analyzing at least one of advertising data detection and traffic statistics.

The transmission unit 170 according to an embodiment of the present invention performs a role of transmitting the network usage pattern information of each analysis target application, the network usage pattern information obtained by the analysis unit 160, to the policy server 200 over the communication network.

That is, the transmission unit 170 enables the policy server 200 to establish the network usage control policy for each application by transmitting the network usage pattern information of each analysis target application to the policy server 200 that establishes the network usage control policy for each application included in the user's wireless terminal device 300 using the network usage pattern information of each analysis target application.

Also, the transmission unit 170 further performs a role of transmitting the result of comparing of the network usage amount information before with after applying network usage control policy information for the user's wireless terminal device 300 and the application server 500, the result of comparing being obtained by an analysis unit 160, to a server over the communication network.

The process unit 180 according to an embodiment of the present invention is a necessary component in case the policy server 200 doesn't generate the network usage control policy information, and performs a role of directly generating the network usage control policy for the analysis target application using the network usage pattern information of the analysis target application, the network usage pattern information obtained by the analysis unit 160.

Technical content of generating the network usage control policy information by the process unit 180 according to the present invention may be same as the following technical content of generating the network usage control policy information by a generation unit 230 in the policy server 200.

According to the present invention, a whole or a part of the functions of each component included in the analysis server 100 may be implemented in a program or program set.

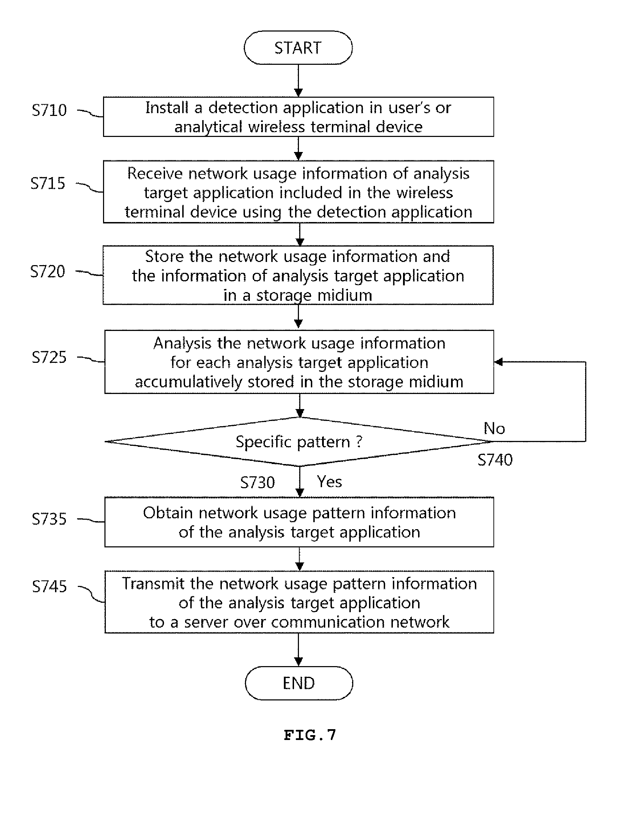

FIG. 7 shows a view illustrating a process for obtaining the pattern information by the analysis server 100 according to an embodiment of the present invention.

At first, the analysis server 100 installs the detecting application in the analytical wireless terminal server 50 and/or a user's wireless terminal device 300 via an application distribution sever such as the Appstore using the manage unit 120, the detecting application detecting the network usage of one or more analysis target applications included in the analytical wireless terminal server 50 and/or a user's wireless terminal device 300 (S710).

Afterwards, the analysis server 100 receives the network usage information of the analysis target application included in the analytical wireless terminal server 50 and/or a user's wireless terminal device 300 from the detection application, through the reception unit 130 (S715).

Afterwards, the analysis server 100 accumulatively stores the network usage information of the analysis target application received by the reception unit 130, in connection with the analysis target application information, in the storage medium 150, through the storage unit 140 (S720).

Afterwards, the analysis server 100 analyzes the network usage information for each analysis target application, the network usage information accumulatively stored in the storage medium 150, through the analysis unit 160 (S725).

In case a specific pattern is checked in the network usage information accumulatively stored in the storage medium 150 (S730), the analysis server 100 obtains the network usage pattern information of each analysis target application by using the specific pattern check by the analysis unit 160 (S735).

If a specific pattern is not checked in the network usage information accumulatively stored in the storage medium 150 (S740), the analysis server 100 repeats the analyzing of the network usage information accumulatively stored in the storage medium 150.

Afterwards, the analysis server 100 transmits the network usage pattern information of each analysis target application to the policy server 200 that establishes a network usage control policy of each application included in the user's wireless terminal device 300 through the transmission unit 170 so that the policy server 200 establishes a network usage control policy of each application (S745).

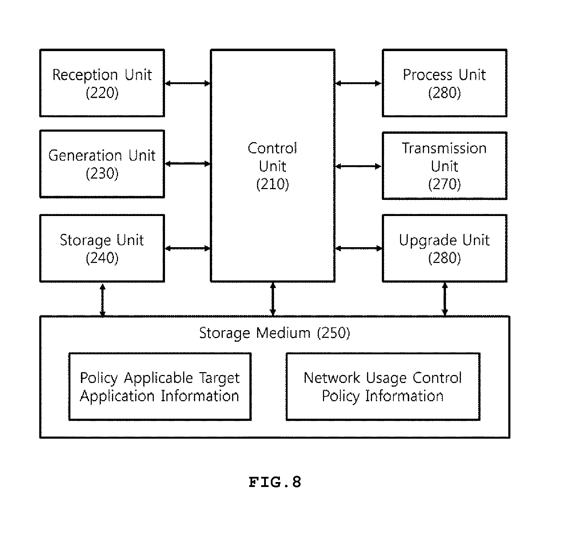

FIG. 8 shows a view illustrating detailed structure of the policy server 200 according to an embodiment of the present invention.

More particularly, FIG. 8 shows a detailed structure of the policy server 200 in the system of operating a policy for reducing wireless network load as shown in FIG. 3. Each component of the structure is merely for describing embodiments of the present invention. The technical feature of the present invention is not limited to the embodiments shown in FIG. 8.

Referring to FIG. 8, the policy server 200 according to an embodiment of the present invention may include a reception unit 220, a generation unit 230, a storage unit 240, a storage medium 250, a process unit 260, a transmission unit 270, update unit 280, and a control unit 210 which may control each of the components described above.

Here, though the policy server 200 is shown as a single server in the drawing for a description of an example, may be composed of one or more separated servers for the each mean or component.

Referring to FIG. 8, the reception unit 220 receives the network usage pattern information of the analysis target application (that is, the policy applicable target application) through the analysis server 100.

The generation unit 230 according to an embodiment of the present invention generates the network usage control policy information of the policy applicable target application by using the network usage pattern information of the policy applicable target application received by the reception unit 220.

According to the present invention, the generation unit 230 checks the network usage pattern information of the policy applicable target application, and then generates policy information.

The network usage pattern information may include at least one of:
information on number of connections to a certain IP or Port or URL per hour by the analysis target application,
information on number of pollings requesting data to a certain IP or Port or URL by the analysis target application,
information on number of pushes transmitting data to a certain IP or Port or URL or ID by the analysis target application,
information on size or capacity of data transmitted to a certain IP or Port or URL or ID by the analysis target application,
information on request and reception of user unauthorized target data including commercial data by the analysis target application,
in case a limit allocated to the wireless terminal device is exceeded by the analysis target application, information on connection of data communication, and
in case a communication network overload is set in a region where the wireless terminal device is located, information on connection of data communication by the analysis target application.

And, the network usage control policy information includes at least one of:
policy information for adjusting number of connections to a certain IP or Port or URL per hour;
policy information for adjusting number of pollings requesting data to a certain IP or Port or URL;
policy information for adjusting number of pushes transmitting data to a certain IP or Port or URL or ID;
policy information for adjusting size or capacity of data transmitted to a certain IP or Port or URL or ID;
policy information for blocking request and reception of user unauthorized target data including commercial data;
policy information, in case a limit allocated to the wireless terminal unit is exceeded, for blocking connection of data communication; and
policy information, in case a communication network overload is set in a region where the wireless terminal device is located, for blocking connection of data communication.

An embodiment of the network usage control policy information generated by the generation unit 230 according to the present invention is as in the following.

```
     <?xml version "1.0" encoding="UTF-8"?>
     <policy>
     <description> Rules for block app </description>
     <rule>
      <rule_id> T_2012_B_02_103030_P2 </rule_id>
      <rule_act> B_03_P_01 </rule_act>
      <app_id> T_2012_A_08_2089_K2_09_3092 </app_id>
      <target_ip> 192.168.0.255 </target_ip>
     <port> 80 </port>
     <refresh> 30 sec </refresh>
     </rule>
     <sign>e5c6e5ccec361baebcf79859e49c5526</sign>
     </policy>
```

In the above example of policy, "<rule_id> T_2012_B_02_103030_P2 </rule_id>" defines the policy value, which indicates that the policy is application network blocking policy (B02)in the year 2012, and the policy administrator's authority is 103030, and the priority for applying the policy is P2 level.

Here, "<rule_id> T_2012_B_02_103030_P2 </rule_id>" may be replaced by "<rule_id> T_2012_P_02_103030_P2 </rule_id>" used for application network polling policy (P02) in the year 2012, or may be used for application network loopback policy (L05) in the year 2012, or may be replaced by "<rule_id> T_2012_L_05_103030_P3 </rule_id>" which indicates that the policy administrator's authority is 103030 and the priority for applying the policy is P3 level.

In addition, "<rule_act> B_03_P_01 </rule_act>" is indicating that the performing method for applying the policy is "apply immediately". And, "<app_id> T_2012_A_08_2089_K2_09_3092 </app_id>" means that the policy applicable application ID is from "A_08_2089_K2" to "09_3092" and a mask value of the policy applicable application is K2.

And, "<sign>e5c6e5ccec361baebcf79859e49c5526</sign>" is a value for integrity verification of the policy information in order to check if the policy document is tampered while coming through the network. "<target_ip> 192.168.0.255 </target_ip>", and "<port> 80 </port>" indicate that the target IP address for blocking (functions such as loopback) is 192.168.0.255, and the target port is 80, respectively.

In addition, "<refresh> 30 sec </refresh>" means that refresh timeout is set to 30 sec. In this case, proxy/cache server will be used for the corresponding packet, and at this time, it means that the request packet transmitted from the wireless terminal device 300 to the network will be forwarded to the proxy/cache server every 30 seconds.

In this case, for transmitting the packet from user's wireless terminal device 300, methods such as forwarding, registering the corresponding bypass information in DNS server, or dynamically/statically changing a routing table for the certain IP address may be used. Unconditional forwarding (bypass) method using the wireless terminal device 300 of user may be used for blacklisting policy for chronic malignant service/packet.

The above described policy information is merely an embodiment, may be various according to characteristics or type of the policy.

The storage unit 240 according to an embodiment of the present invention stores the network usage control policy information of the policy applicable target application generated by the generation unit 230, in connection with the policy applicable target application information, in the storage medium 250.

According to the present invention, the storage unit 240 updates the network usage control policy information of the policy applicable target application stored in the storage medium 250 whenever the network usage control policy information of the policy applicable target application is updated, and stores the updated network usage control policy information in the storage medium 250.

The storage medium 250 according to the present invention performs a role of storing the network usage control policy information of the one or more policy applicable target applications stored by the storage unit 240 in connection with the policy applicable target application information.

According to the present invention, the storage medium 250 may be included in the policy server 200 or a separate server over the communication network.

Also, the storage medium 250 may further store the network usage pattern information of the policy applicable target application received by the reception unit 220.

The process unit 260 according to the present invention performs a role of processing so that the policy information for reducing network load is transmitted to the application for reducing network load included in the user's wireless terminal device 300, the policy information comprising the network usage control policy information of the policy applicable target application and the policy applicable target application information stored in the storage medium 250.

The transmission unit 270 according to the present invention performs a role of processing so that the policy information is transmitted to the application for reducing network load included in the user's wireless terminal device 300, interlocking with the process unit 260.

The update unit 280 according to the present invention performs a role of, if the network usage control policy information of the policy applicable target application is changed, processing an upgrade for the changed network usage control policy information of the policy applicable target application, linked with the application for reducing network load.

According to the present invention, a whole or a part of the functions of each component included in the policy server 200 may be implemented in a program or program set.

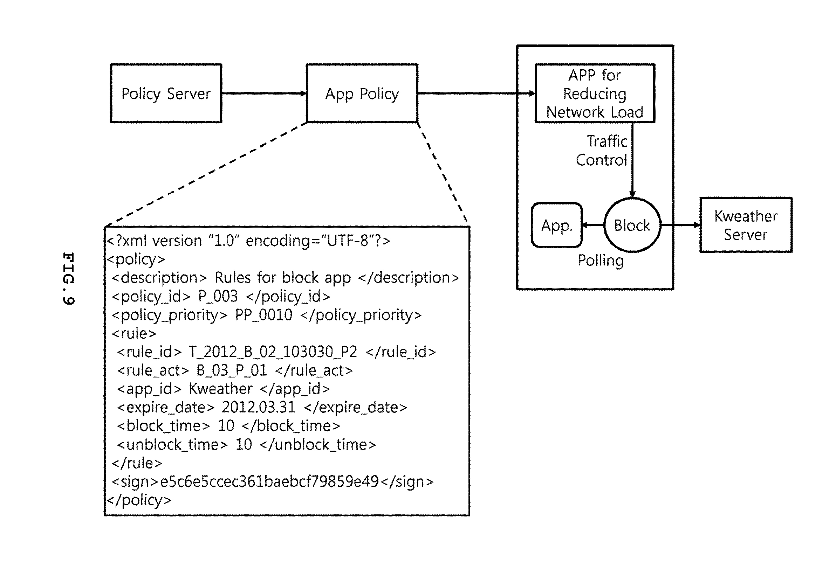

FIG. 9 shows a view illustrating examples of operating the policy information by the policy server 200 according to an embodiment of the present invention.

Referring to FIG. 9, unnecessary data polling of an application for providing weather information may be blocked by generating the network usage control policy information of the application for providing weather information included in the wireless terminal device and transmitting the generated network usage control policy information to the application for reducing network load included in the wireless terminal device.

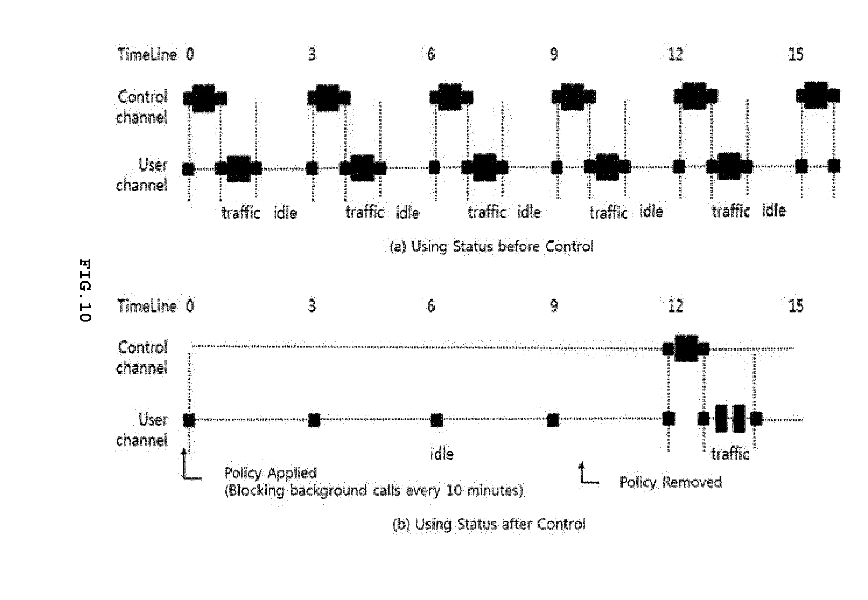

FIG. 10 shows a view illustrating an effect of controlling network usage using the policy information according to an embodiment of the present invention.

Referring to FIG. 10, in response to the network usage control using the network usage control policy information (policy for blocking background call admission every 10 minutes) by the application for reducing network load included in the wireless terminal device, the effect of traffic reduction in the wireless terminal device before and after network usage environment control by applying the policy is shown.

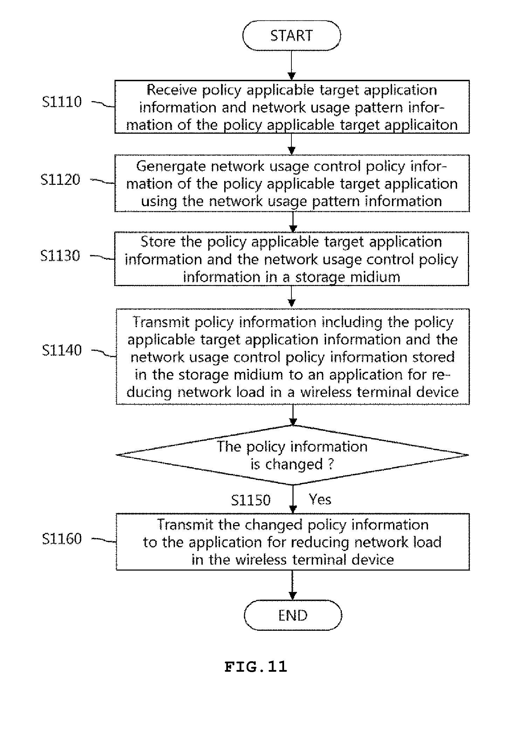

FIG. 11 shows a view illustrating a process for operating the policy by the policy server 200 according to an embodiment of the present invention.

At first, the policy server 200 receives the network usage pattern information of the policy applicable target application through the reception unit 220 (S1110).

Afterwards, the policy server 200 generates the network usage control policy information of the policy applicable target application by using the network usage pattern information of the policy applicable target application through the generation unit 230 (S1120).

According to the present invention, the generation unit 230 checks the network usage pattern information of the policy applicable target application, and then generates policy information.

The network usage pattern information may include at least one of:
information on number of connections to a certain IP or Port or URL per hour by the analysis target application,
information on number of pollings requesting data to a certain IP or Port or URL by the analysis target application,
information on number of pushes transmitting data to a certain IP or Port or URL or ID by the analysis target application,
information on size or capacity of data transmitted to a certain IP or Port or URL or ID by the analysis target application,
information on request and reception of user unauthorized target data including commercial data by the analysis target application,
in case a limit allocated to the wireless terminal device is exceeded by the analysis target application, information on connection of data communication, and
in case a communication network overload is set in a region where the wireless terminal device is located, information on connection of data communication by the analysis target application.

And, the network usage control policy information includes at least one of:
policy information for adjusting number of connections to a certain IP or Port or URL per hour;
policy information for adjusting number of pollings requesting data to a certain IP or Port or URL;
policy information for adjusting number of pushes transmitting data to a certain IP or Port or URL or ID;
policy information for adjusting size or capacity of data transmitted to a certain IP or Port or URL or ID;
policy information for blocking request and reception of user unauthorized target data including commercial data;
policy information, in case a limit allocated to the wireless terminal unit is exceeded, for blocking connection of data communication; and
policy information, in case a communication network overload is set in a region where the wireless terminal device is located, for blocking connection of data communication.

Afterwards, the policy server 200 stores the network usage control policy information of the policy applicable target application generated by the generation unit 230, in connection with the policy applicable target application information, in the storage medium 250 through the storage unit 240 (S1130).

Afterwards, the policy server 200 processes so that the policy information for reducing network load is transmitted to the application for reducing network load included in the user's wireless terminal device 300, the policy information comprising the network usage control policy information of the policy applicable target application and the policy applicable target application information stored in the storage medium 250, through the process unit 260 and the transmission unit 270 (S1140).

Afterwards, in case the network usage control policy information of the policy applicable target application is changed (S1150), the policy server 200 upgrades one or more changed items of the network usage control policy information of the policy applicable target application pre-stored in the storage medium 250 through the update unit 280, and then processes so that the changed policy information is transmitted to the application for reducing network load through the process unit 260 and transmission unit 270 (S1160).

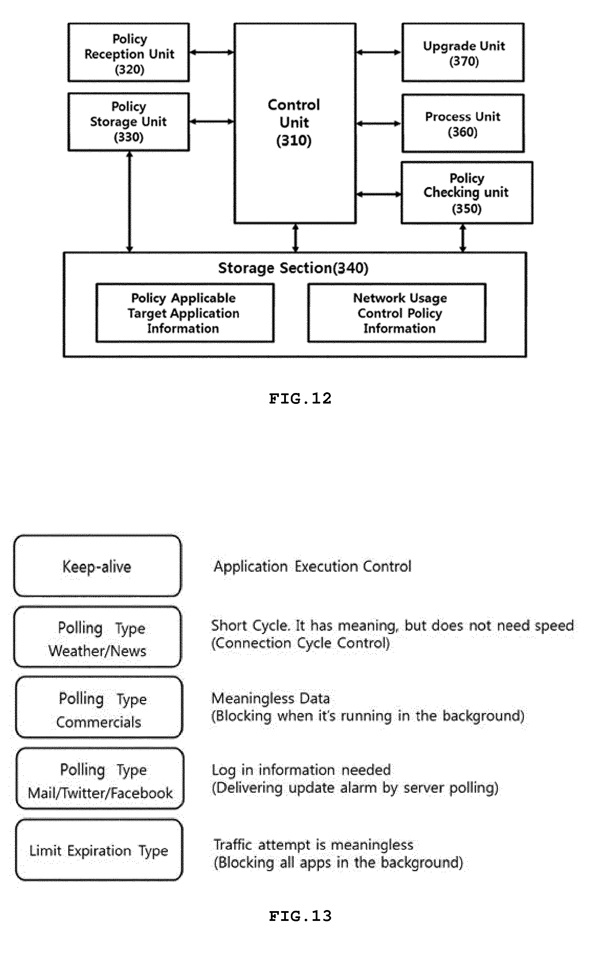

FIG. 12 shows a view illustrating detailed structure of the wireless terminal device 300 according to an embodiment of the present invention.

More particularly, FIG. 12 shows a detailed structure of the wireless terminal device 300 over the communication network as shown in FIG. 3. Each component of the structure is merely for describing embodiments of the present invention. The technical feature of the present invention is not limited to the embodiments shown in FIG. 4.

Referring to FIG. 12, the wireless terminal device 300 according to the present invention, may include a policy reception unit 320, a policy storage unit 330, a storage section 340, a policy checking unit 350, a process unit 360, an upgrade unit 370, and a control unit 310 which may control each of the components described above.

Referring to FIG. 12, the policy reception unit 320 may receive policy information - the policy information including at least one of policy applicable target application information and network usage control policy information for each of the policy applicable target applications - for reducing network load from the policy server 200. The policy storage unit 330 may store the policy information received by the policy reception unit 320 into the storage section 340.

The policy reception unit 320 and the policy storage unit 330 according to the present invention may renew or upgrade the policy information stored in the storage section 340 whenever changed or new information for the policy information stored in the storage section 340 is transmitted.

The storage section 340 according to the present invention may perform a role of classifying the policy information stored by the policy storage unit 330 into the policy applicable target application information and the network usage control policy information for each of the applications, and interconnecting and storing them. A memory included in the wireless terminal device 300 or a section allocated for the application for reducing network load or an IC chip or an USIM chip may be used for the storage section 340.

The policy checking unit 350 according to the present invention may check firstly at least one of the policy information stored in the storage section 340, and in case there exists any of the policy information as a result of the first checking, may check secondly the policy applicable target application information included in the policy information. And the policy checking unit 350 may check thirdly whether the policy applicable target application corresponding to a result of the second checking is included in the wireless terminal device 300.

According to an embodiment of the present invention, the policy checking unit 350, by matching unique code or title corresponding to the policy applicable target application information, may check whether the policy applicable target application is included in the wireless terminal device 300.

In addition, the policy checking unit 350, in case there exists none of the policy information as a result of the first checking, may further perform a role of requesting for the policy information to a server over the communication network.

The process unit 360 according to an embodiment of the present invention, in case the policy applicable target application is included in the wireless terminal device 300 as a result of the third checking by the policy checking unit 350, by applying the network usage control policy information stored in the storage section 340 to the application, may perform a role of controlling network usage environment corresponding to the application for reducing network load.

In other words, the process unit 360, in case the network usage control policy information is policy information for adjusting number of connections to a certain IP or Port or URL per hour, may control number of connections to a certain IP or Port or URL per hour,
in case the network usage control policy information is policy information for adjusting number of pollings requesting data to a certain IP or Port or URL, may control number of pollings requesting data to a certain IP or Port or URL,
in case the network usage control policy information is policy information for adjusting number of pushes transmitting data to a certain IP or Port or URL or ID, may control number of pushes transmitting data to a certain IP or Port or URL or ID,
in case the network usage control policy information is policy information for adjusting size or capacity of data transmitted to a certain IP or Port or URL or ID, after checking size or capacity of data transmitted through policy applicable target application, may block transmission of data exceeding a limit of size or capacity,
in case the network usage control policy information is policy information for blocking request and reception of user unauthorized target data including commercial data, may block request or reception of user unauthorized target data for the policy applicable target application,
in case the network usage control policy information is policy information for blocking connection of data communication when a limit allocated to the wireless terminal device 300 is exceeded, may block connection of data communication for the policy applicable target application,
in case the network usage control policy information is policy information for blocking connection of data communication when a communication network overload is set in a region where the wireless terminal device 300 is located, may block connection of data communication for the policy applicable target application.

According to an aspect of the present invention, the process unit 360 may control different network usage environment according to the type or the form of the policy information. An example of applying the network usage control policy information by the process unit 360 will be described in the following.

For example, in case the network usage control policy information for the policy applicable target application is:

```
     <?xml version "1.0" encoding="UTF-8"?>
     <policy>
     <description> Rules for block app </description>
     <rule>
      <rule_id> T_2012_B_02_103030_P2 </rule_id>
      <rule_act> B_03_P_01 </rule_act>
      <app_id> T_2012_A_08_2089_K2_09_3092 </app_id>
      <target_ip> 192.168.0.255 </target_ip>
     <port> 80 </port>
     <refresh> 30 sec </refresh>
     </rule>
     <sign>e5c6e5ccec361baebcf79859e49c5526</sign>
     </policy>
```

In this case, the process unit 360 according to the present invention perceives that the policy information is an application network blocking policy in the year 2012 based on "<rule_id> T_2012_B_02_103030_P2 </rule_id>", the performing method for applying the policy is "apply immediately" based on "<rule_act> B_03_P_01 </rule_act>", and the policy applicable application ID is from "A_08_2089_K2" to "09_3092" and a mask value of the policy applicable application is K2 based on "<app_id> T_2012_A_08_2089_K2_09_3092 </app_id>". And the process unit 360 checks whether the policy document is tampered while coming through the network based on "<sign>e5c6e5ccec36lbaebcf79859e49c5526</sign>", perceives that the target IP address for blocking (functions such as loopback) is 192.168.0.255, and the target port is 80 based on "<target_ip> 192.168.0.255 </target_ip>", and "<port> 80 </port>", and controls a network usage environment for the corresponding application by setting refresh to 30 sec based on "<refresh> 30 sec </refresh>.

The above example of processing by the process unit 360 is merely an embodiment. The process may be various according to characteristics or type of the policy.

The upgrade unit 370 according to an embodiment of the present invention, in case the network usage control policy information for the policy applicable target application is changed, may process upgrading of the network usage control policy information stored in the storage section 340, for the policy applicable target application.

According to an embodiment of the present invention, a whole or a part of the functions of each component included in the policy server 200 may be implemented in a program or program set.

FIG. 13 shows a view illustrating examples of applying policy information for each application according to an embodiment of the present invention.

Referring to FIG. 13, in case the policy applicable target application is an application which maintains a state of Keep-Alive, the network usage control policy information is set for controlling execution itself of the application in order to control execution of the application. In case the policy applicable target application is an application which executes frequent pollings, the network usage control policy information is set for controlling the number of pollings or the period of pollings in order to adjust the number of pollings or the period of pollings. In case available data limit of the user's wireless terminal device 300 is expired, the traffic attempt is regarded as meaningless, thus the network usage control policy information is set for blocking network connection of every applications in background in order to control blocking network usage of each application.

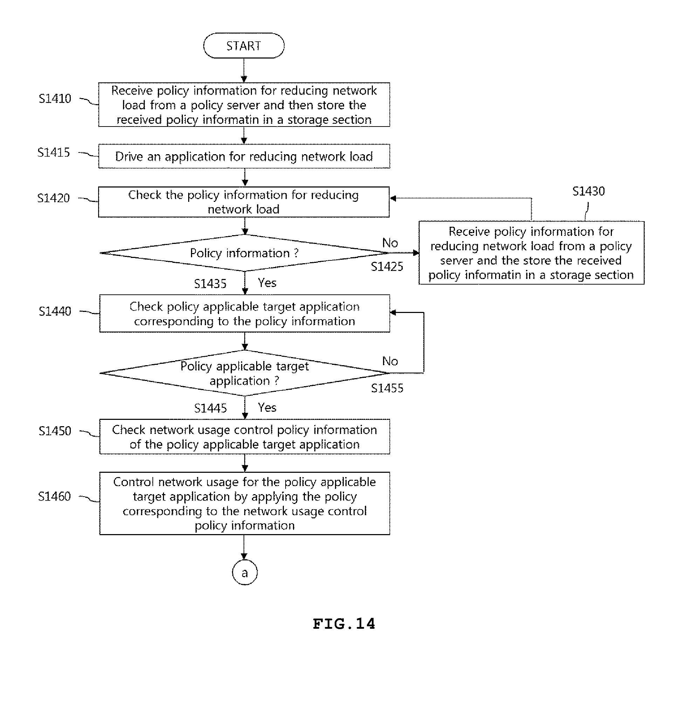

FIG. 14 shows a flow chart illustrating a process of applying policy information for the user's wireless terminal device 300 according to an embodiment of the present invention.

At first, the user's wireless terminal device 300 may receive the policy information for reducing network load - the policy information including at least one of policy applicable target application information and network usage control policy information for each of the policy applicable target applications - from the policy server 200 through the policy reception unit 320 (or network load reduction application), and may store the received policy information in a storage section 340 using a policy storage unit 330 (or network load reduction application) (S1410).

Afterwards, the user's wireless terminal device 300, after checking if the network load reduction application is running, may run the network load reduction application (S1415).

The step of S1415 may be omitted, or may be changed the order with the step S1410.

Afterwards, the user's wireless terminal device 300 may check whether the policy information for reducing network load exists using the policy checking unit 350 (or network load reduction application) (S1420).

If the policy information for reducing network load does not exist as a result of checking in the step S1420, the user's wireless terminal device 300 may send a request for the policy information to the policy server 200, and may receive policy information for reducing network load - the policy information including at least one of policy applicable target application information and network usage control policy information for each application - from the policy server 200 through the policy reception unit 320 (or network load reduction application), and may store the policy information into a storage section 340 using the policy storage unit 330 (or network load reduction application) (S1430).

In case the policy information for reducing network load exists as a result of checking in the step S1420, the user's wireless terminal device 300 may check the policy applicable target application using the policy checking unit 350(or network load reduction application) (S1440).

When the policy applicable target application is checked in the step S1440 (S1445), the user's wireless terminal device 300 may check the network usage control policy information corresponding to the policy applicable target application stored in the storage section 340 using the process unit 360(or network load reduction application) (S1450).

In case the policy applicable target application is not checked in the step S1440, the user's wireless terminal device 300 may repeat the step S1440 (S1455).

Afterwards, the user's wireless terminal device 300 may control network usage for the policy applicable target application by applying the policy corresponding to the network usage control policy checked in the step S1450 using the process unit 360 (or network load reduction application) (S1460).

Not shown in FIG. 14, the step S1460, in case the network usage control policy information is policy information for adjusting number of connections to a certain IP or Port or URL per hour, may further include: counting number of connections to a certain IP or Port or URL of the policy applicable target application per hour; comparing the counted number with pre-set number of connections per hour in policy information; and in case the counted number corresponds with the pre-set number in the policy information as a result of the comparing, blocking connection to the certain IP or Port or URL of the policy applicable target application.

In addition, the step S1460, in case the network usage control policy information is policy information for adjusting number of pollings to a certain IP, or Port, or URL, may further include: counting number of pollings to a certain IP or Port or URL of the policy applicable target application; comparing the counted number with pre-set number of pollings in the policy information; and in case the counted number corresponds with the pre-set number of pollings in the policy information, blocking data request to the certain IP or Port or URL of the policy applicable target application.

In addition, the step S1460, in case the network usage control policy information is policy information for adjusting number of pushes transmitting data to a certain IP or Port or URL or ID, may further include: counting number of pushes transmitting data to a certain IP or Port or URL or ID for the policy applicable target application; comparing the counted number and pre-set number of pushes in the policy information; and in case the counted number corresponds with the pre-set number in the policy information as a result of the comparing, blocking data push to the certain IP or Port or URL of the policy applicable target application.

In addition, the step S1460, in case the network usage control policy information is policy information for adjusting size or capacity of data transmitted to a certain IP or Port or URL or ID, may further include: checking size or capacity of data transmitted to a certain IP or Port or URL or ID for the policy applicable target application; and in case the size of data exceeds pre-set size or capacity in the policy information as a result of the checking, blocking data transmission to the certain IP or Port or URL of the policy applicable target application.

In addition, the step S1460, in case the network usage control policy information is policy information for blocking request and reception of user unauthorized target data including commercial data, may further include: checking whether a certain IP or Port or URL, to which the policy applicable target application is connecting, is an address for request or reception of user authorized target data; and in case the certain IP or Port or URL, to which the policy applicable target application is connecting, is not an address for request or reception of user authorized target data as a result of the checking, blocking connection to the certain IP or Port or URL of the policy applicable target application.

In addition, the step S1460, in case a limit allocated to the user's wireless terminal device 300 is exceeded, may further include: comparing the limit allocated to the user's wireless terminal device 300 with amount of data usage consumed up to a current time point; in case the limit allocated to the wireless terminal device 300 is exceeded as a result of the comparison, blocking data communication connection of the policy applicable target application.

In addition, the step S1460, in case the network usage control policy information is policy information for blocking connection of data communication when a communication network overload is set in a region where the user's wireless terminal device 300 is located, may further include: counting delay time caused by the communication network overload in the region where the user's wireless terminal device 300 is located; comparing the counted value with a pre-set time in the policy information; and in case the counted value exceeds the pre-set time in the policy information as a result of the comparison, blocking data communication connection of the policy applicable target application.

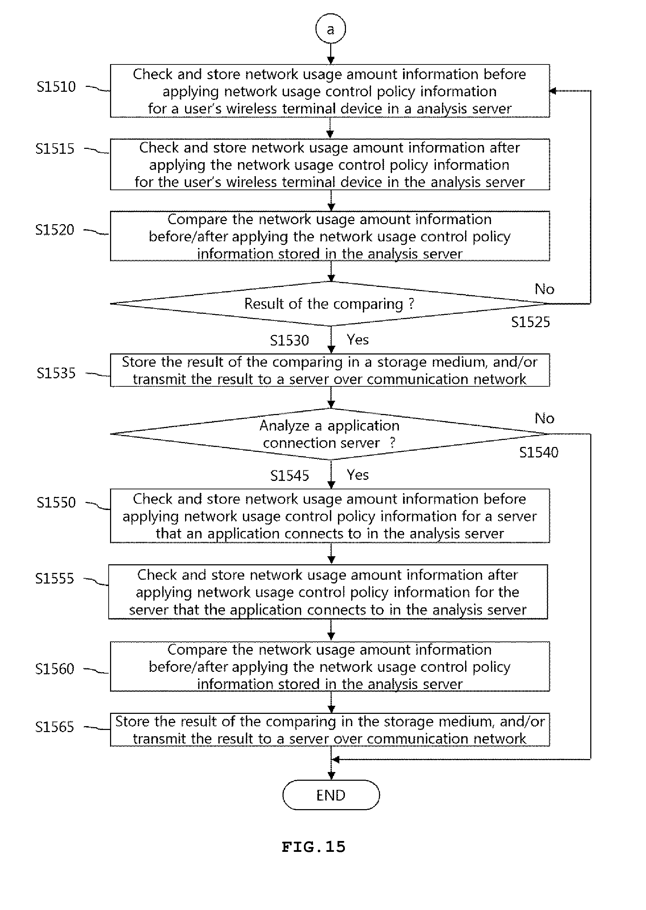

FIG. 15 shows a flow chart illustrating a process of analyzing amount of network usage by applying the policy information according to an embodiment of the present invention.

First, the analysis server 100 receives the network usage amount information before applying the network usage control policy information for the user's wireless terminal device 300 and/or checks the network usage amount information, and then stores the network usage amount information in the storage medium 150 (S1510).

Afterwards, the analysis server 100 receives the network usage amount information after applying the network usage control policy information for the user's wireless terminal device 300 from the user's wireless terminal device 300 or the mobile carrier's server and/or checks the network usage amount information, and then stores the network usage amount information in the storage medium 150 (S1515).

Afterwards, the analysis server 100 compares the network usage amount information before with after applying network usage control policy information for the user's wireless terminal device 300 through the storage medium 150 (S1520).

If there is not a difference in a result of the comparing, the steps of S1510 to S1520 are repeated (S1525).

And, if there is a difference in a result of the comparing, the analysis server 100 stores the result of the comparing in the storage medium 150 and/or transmits the result to a third-party server over communication network (S1525).

Afterwards, in case a comparison analysis for the network usage amount of the application server 500 corresponding to the application included in the user's wireless terminal device 300 is not additionally required (S1540), the step of the analysis is terminated. And, in case the comparison analysis for the network usage amount of the application server 500 corresponding to the application included in the user's wireless terminal device 300 is additionally required (S1545), the analysis server 100 receives the network usage amount information before applying the network usage control policy information for the application server 500 corresponding to the application included in the user's wireless terminal device 300 from the application server 500 or the mobile carrier's server and/or checks the network usage amount information, and then stores the network usage amount information in the storage medium 150 (S1550).

Afterwards, the analysis server 100 receives the network usage amount information after applying the network usage control policy information for the application server 500 corresponding to the application included in the user's wireless terminal device 300 from the application server 500 or the mobile carrier's server and/or checks the network usage amount information, and then stores the network usage amount information in the storage medium 150 (S1555).

Afterwards, the analysis server 100 compares the network usage amount information before with after applying network usage control policy information for the application server 500 through the storage medium 150 (S1560).

Afterwards, the analysis server 100 stores the result of the comparing by the step of S1560 in the storage medium 150 and/or transmits the result to a third-party server over communication network (S1565).

In addition, the above-described present invention may be implemented as a program executable in a computer and may be stored in a computer-readable recording medium; examples of the computer-readable recording medium may be ROM, RAM, CD-ROM, Magnetic Tape, Floppy Disk, Optical Data Storage, etc., including carrier wave (e.g., transmission through internet).

The computer-readable recording medium may be distributed to a computer systems connected in a network, so that the computer-readable code may be stored and executed in a distributed mode. Also, functional program, code and code segments for implementing the controlling method may be inferred easily by programmers who skilled in the art of the present invention.

In the above, preferred embodiments of the present invention have been described. However, these embodiments are merely examples and do not limit the present invention, so that persons who skilled in the art of the present invention may easily transform and modify within the limit of the technical spirit of the present invention. For example, each of the components shown in detail in the embodiments of the present invention may be implemented in transformation. In addition, the differences relating these transformations and modifications shall be regarded to be included in the scope of the present invention as defined in the attached claims of the present invention.

## Claims

1. A system of analyzing a policy for reducing wireless network load, comprising:
an analysis server for receiving network usage information of analysis target applications included in a wireless terminal device through a detecting application that detects network usage information of one or more analysis target applications, the detecting application included in an user's wireless terminal device or an analytical wireless terminal device, storing the received network usage information in connection with information of the analysis target application in a storage medium, and obtaining network usage pattern information of the analysis target application by analyzing the network usage information of each analysis target application; and
a policy server for generating network usage control policy information of the analysis target application by using the network usage pattern information of the analysis target application, and processing so that policy information for reducing network load is transmitted to an application for reducing network load included in the user's wireless terminal device, the policy information including the generated network usage control policy information and information of policy applicable target application,
wherein the analysis server compares amount of network usage after applying the network usage control policy information for the user's wireless terminal device with that before the applying, and then obtains a result of the comparing.

2. The system of analyzing a policy for reducing wireless network load according to claim 1, wherein the analysis server compares amount of network usage after applying the network usage control policy information for a server accessed by the analysis target application included in the user's wireless terminal device with that before the applying for the server, and then obtains a result of the comparing.

3. The system of analyzing a policy for reducing wireless network load according to claim 1, further comprising:
an application manage server for receiving policy information for reducing network load from a server over a communication network, the policy information including at least one of policy applicable target application information and network usage control policy information for each of the policy applicable target applications, storing the policy information into a storage section, performing a first checking of at least one of the policy information stored in the storage section,
in case there exists the policy information as a result of the first checking, performing a second checking of the policy applicable target application information included in the policy information,
performing a third checking of whether the policy applicable target application corresponding to a result of the second checking is included in the wireless terminal device, and
in case the policy applicable target application is included in the wireless terminal device as a result of the third checking, controlling network usage environment corresponding to the policy applicable target application by applying the network usage control policy information for the application stored in the storage section to the application.

4. The system of analyzing a policy for reducing wireless network load according to claim 3, wherein the network usage environment includes at least one of number of network connections, network connection time, number of data transmission, number of data reception, capacity of data transmission, capacity if data reception, data transmission time, data reception time, IP or Port or URL of connection target network, IP or Port or URL of connection blocking target network, a limit of data communication and amount of network load.

5. The system of analyzing a policy for reducing wireless network load according to claim 1, wherein the network usage pattern information of the analysis target application includes at least one of:
information on number of connections to a certain IP or Port or URL per hour by the analysis target application,
information on number of pollings requesting data to a certain IP or Port or URL by the analysis target application,
information on number of pushes transmitting data to a certain IP or Port or URL or ID by the analysis target application,
information on size or capacity of data transmitted to a certain IP or Port or URL or ID by the analysis target application,
information on request and reception of user unauthorized target data including commercial data by the analysis target application,
in case a limit allocated to the wireless terminal device is exceeded by the analysis target application, information on connection of data communication, and
in case a communication network overload is set in a region where the wireless terminal device is located, information on connection of data communication by the analysis target application.

6. The system of analyzing a policy for reducing wireless network load according to claim 1, wherein the network usage control policy information includes at least one of:
policy information for adjusting number of connections to a certain IP or Port or URL per hour;
policy information for adjusting number of pollings requesting data to a certain IP or Port or URL;
policy information for adjusting number of pushes transmitting data to a certain IP or Port or URL or ID;
policy information for adjusting size or capacity of data transmitted to a certain IP or Port or URL or ID;
policy information for blocking request and reception of user unauthorized target data including commercial data;
policy information, in case a limit allocated to the wireless terminal unit is exceeded, for blocking connection of data communication; and
policy information, in case a communication network overload is set in a region where the wireless terminal device is located, for blocking connection of data communication.

7. A method of analyzing a policy for reducing wireless network load according, comprising:
receiving, in an analysis server, network usage information of analysis target applications included in a wireless terminal device through a detecting application that detects network usage information of one or more analysis target applications, the detecting application included in an user's wireless terminal device or an analytical wireless terminal device;
storing, in the analysis server, the received network usage information in connection with information of the analysis target application in a storage medium;
obtaining, in the analysis server, network usage pattern information of the analysis target application by analyzing the network usage information of each analysis target application;
generating, in a policy server, network usage control policy information of the analysis target application by using the network usage pattern information of the analysis target application;
processing, in the policy server, so that policy information for reducing network load is transmitted to an application for reducing network load included in the user's wireless terminal device, the policy information including the generated network usage control policy information and information of policy applicable target application; and
comparing, in the analysis server, amount of network usage after applying the network usage control policy information for the user's wireless terminal device with that before the applying; and
transmitting, in the analysis server, a result of the comparing to a server over a communication network or storing the result of the comparing in the storage medium.

8. The method of analyzing a policy for reducing wireless network load according to claim 7, further comprising:
comparing, in the analysis server, amount of network usage after applying the network usage control policy information for a server accessed by the analysis target application included in the user's wireless terminal device with that before the applying; and
transmitting, in the analysis server, a result of the comparing for the server to a server over a communication network or storing the result of the comparing for the server in the storage medium.

9. A computer-readable recording medium for recording programs to execute the method of one of claims 7 and 8.
